# EUROPÄISCHE PATENTSCHRIFT

(11) **EP 0 512 433 B1**
(45) Veröffentlichungstag und Bekanntmachung des Hinweises auf die Patenterteilung: **30.07.1997**
(21) Anmeldenummer: 92107438.1
(22) Anmeldetag: 30.04.1992
(51) Int. Cl.: B29D 31/00

(54) **Poröses Honeycomb-Material, Verfahren zu seiner Herstellung und seine Verwendung**
Porous honeycomb material, process for its manufacture and its use
Nid d'abeilles poreux, procédé pour sa fabrication et son application

(30) Priorität: 04.05.1991 DE 4114570
(43) Veröffentlichungstag der Anmeldung: 11.11.1992
(73) Patentinhaber: HOECHST AKTIENGESELLSCHAFT, 65926 Frankfurt am Main (DE)
(72) Erfinder: Disselbeck, Dieter, W-6232 Bad Soden am Taunus (DE)

(56) Entgegenhaltungen:
- EP-A- 0 368 238
- WO-A-89/10258
- DE-A- 3 027 307
- FR-A- 2 051 685
- GB-A- 613 529
- NL-A- 6 704 016

## Beschreibung

Die vorliegende Erfindung betrifft ein Honeycomb-Material, dessen Wandungen aus einem porösen Netzwerk eines Faserverbundwerkstoffes bestehen, Verfahren zur Herstellung dieses Materials sowie dessen Verwendung.

Honeycomb-Material, ein Leichtbaustoff mit Bienenwabenstruktur, hat insbesondere als Kernmaterial für Sandwichkonstruktionen breite Anwendung gefunden. Das herkömmliche Material besteht aus Aluminium oder aus Verbundstoffen mit duromeren Harzsystemen, insbesondere aus (R)Nomex-Papier, das mit Phenolharzen getränkt und ausgehärtet ist.

Aus der PCT-Patentanmeldung WO 89/10258 ist ein Verfahren zur Herstellung von Honeycomb-Material bekannt, bei dem aus einem Stapelfaservlies und einem Thermoplast ein geschlossenes, faserverstärktes Flächengebilde hergestellt wird, welches anschließend in herkömmlicher Weise zu dem Honeycomb-Material verarbeitet wird. Die Herstellung des geschlossenen faserverstärkten Flächengebildes kann dabei zur Vermeidung von Imprägnierschritten so erfolgen, daß eine Mischung von Thermoplastfasern und Verstärkungsfasern zu einem Vlies abgelegt wird, welches anschließend durch heißkalandrieren zu dem Flächengebilde verschmolzen wird. Eine weitere, dort beschriebene Alternative ist das gemeinsame Heißkalandrieren eines Faservlieses mit einer Thermoplastfolie.

Ein ähnliches Verfahren ist auch aus der deutschen Patentschrift 38 38 153 bekannt. Dort werden ein Faservlies, das vornehmlich aus anorganischen Materialien besteht, und ein aufgeheiztes Thermoplastfolienband durch einen Walzvorgang miteinander verbunden.

Aus der GB-A-613,529 sind Sandwich-Strukturen mit einem Kernmaterial aus unterschiedlich geformten Zellen beschrieben, darunter auch solche mit einem Kern mit Honeycomb-Struktur. Die Seitenwände der beschriebenen Wabenzellen sind vollständig mit Harz getränkt.

Nach dem in der DE-A-30 27 307 beschriebenen Verfahren lassen sich Honeycomb-Strukturen herstellen, indem man zunächst mehrere flexible Bahnen, die Kohlefasern enthalten, mit einem Haftmittel verbindet und zu einer Honeycomb-Struktur verformt. Anschließend wird die so erhaltene Wabenstruktur mit einem härtbaren Harz getränkt und durch thermisches Aushärten des Kunstharzes vollständig versteift. Auf diese Weise ergibt sich ein erhärtetes Honeycomb-Material mit vollständig geschlossenen Zellen.

Diese bekannten Ausführungsformen der Honeycomb-Materialien können jedoch nicht den vielfältigen Anforderungen und Wünschen der Praxis gerecht werden. So ergeben sich Probleme bei der Verarbeitung von Honeycombs zu z.B. Sandwichbauteilen und bei deren Verwendung aufgrund der in diesen Honeycomb-Sanwichbauteilen eingeschlossenen Gasen. Besonders beim Einsatz von Honeycomb-Materialien mit geschlossenen Deckflächen können sich ernste Probleme ergeben, wenn die Bauteile in Zonen mit vermindertem Luftdruck gebracht werden, weil der dann nicht mehr kompensierte Innendruck zu einer Destabilisierung der Bauteile führen kann. Auch die relativ hohe Feuchtigkeitsaufnahme der bekannten Honeycombs aus Nomex-Papier("Hot/Wet-Verhalten") bereitet oft Schwierigkeiten und die Schadenstoleranz bei Schlagbeanspruchung ist vielfach noch nicht ausreichend. Last not least spielt auch die Recyclingfähigkeit von modernen Konstruktionsmaterialien eine immer wichtigere Rolle und auch in dieser Hinsicht erfüllen herkömmliche Honeycomb-Materialien nicht die Wünsche der Anwender.

Das Honeycomb-Material der vorliegenden Erfindung weist die obigen Mängel nicht oder nur in erheblich vermindertem Ausmaß auf.
Es ist dadurch gekennzeichnet, daß die Waben-Wandungen des Materials aus einem porösen Netzwerk eines Faserverbundwerkstoffes bestehen.

Das poröse Netzwerk des erfindungsgemäßen Honeycomb-Materials besteht, wie ein Fischernetz, aus einer Vielzahl von miteinander überkreuzend verbundenen Stegen des Faserverbundwerkstoffs, zwischen denen offene Zwischenräume vorhanden sind.

Der Faserverbundwerkstoff besteht aus einem in einer Hart-Matrix eingebetteten Verstärkungsgarn.

Harze im Sinne dieser Erfindung sind alle hochmolekularen vernetzten oder unvernetzten Substanzen, deren mechanische Festigkeit ausreicht, um dem Faserverbundwerkstoff Formbeständigkeit zu verleihen.
Vernetzte Polymere, die als Matrixharz geeignet sind, sind vernetzte Zweikomponentenharze wie Epoxidharze, ungesättigte Polyester (sog. Alkydharze) oder insbesondere Duroplastharze wie Phenolharze, Melaminharze oder Harnstoffharze.
Andere, technisch weniger gängige Harzsysteme können analog eingesetzt werden.

Vorzugsweise besteht der Faserverbundwerkstoff des Honeycomb-Materials aus einem in einer Thermoplast-Matrix eingebetteten Verstärkungsgarn aus Filamenten, die einen höheren Schmelzpunkt als der Thermoplast der Matrix aufweisen.

Die Thermoplastmatrix besteht bei diesen bevorzugten Ausführungsformen aus einem in der Regel unvernetzten, unzersetzt schmelzbaren organischen Polymerisat oder Polykondensat.
Je nach dem beabsichtigten Anwendungszweck wählt man aus der Vielzahl der zur Verfügung stehenden Thermoplasten eines mit einem geeigneten Schmelz bzw. Erweichungspunkt. Zweckmäßigerweise hat das organische Polymerisat oder Polykondensat der Thermoplastmatrix einen Schmelzpunkt von 100 bis 400°C.
Als Grundstoffe für eine Thermoplastmatrix eigenen sich Polymerisate wie gegebenenfalls substituiertes Polyalkylen, beispielsweise Polyethylen, Polypropylen oder Polyvinylchlorid.
Besonders geeignet wegen der vielfachen Modifizierbarkeit ihrer Zusammensetzung und Eigenschaften sind als Matrixharze Polykondensate, und zwar insbesondere teil- oder vollaromatische Polyester, aliphatische oder aromatische Polyamide, Polyetherketone, Polyetheretherketone, Polyethersulfone, Polysulfone, Polyphenylensulfid oder Polyetherimid.
Die Herstellung, die Verarbeitung und die Eigenschaften dieser thermoplastischen Matrixharze ist dem Fachmann bekannt. Sie sind in der einschlägigen Literatur beschrieben und in vielen Typen mit einer breiten Palette von Spezifkationen im Handel erhältlich. Eine Übersicht mit weiteren zahlreichen Literaturzitaten findet sich in Ullmann's Encyclopedia of Industrial Chemistry, 5.Auflage, Band A7, Seite 369 ff.(Composite Materials) sowie Band A13, Seite 1 ff.(High- Performance Fibres).

Das in dem Faserverbundwerkstoff des erfindungsgemäßen Honeycomb-Material enthaltene Verstärkungsgarn kann ein Spinnfasergarn oder ein texturiertes oder nicht texturiertes Endlosfasergarn sein.
Spinnfasergarne werden durch Sekundärspinnen aus relativ kurzen Filamentabschnitten, wie sie in Naturfasern oder in synthetischen Stapelfasern vorliegen, hergestellt.
Endlosfasergarne bestehen aus endlosen synthetischen (z.B. Polyester) oder halbsynthetischen (z.B. Regeneratzellulose) Filamenten.
Die Garne können texturiert sein, d.h. sie können eine mehr oder weniger stark ausgeprägte Kräuselung aufweisen und sie können ungezwirnt oder gezwirnt sein.

Die Auswahl des Grundstoffs für das Fasermaterial richtet sich naturgemäs nach der Art des Matrixharzes.

Weitgehend unabhängig ist man bei der Wahl des Fasergrundstoffs, wenn ein vernetzendes Matrixharz vorliegt.
In diesem Fall können die Filamente des Verstärkungsgarns aus einem anorganischen Material wie z.B. aus Glasfasern, Steinfasern, Keramikfasern oder Kohlenstoffasern oder aus einem organischen, spinnfähigen Material bestehen.
Verstärkungsgarne aus organischen Fasern können aus natürlichen Fasern, z.B. Zellulosefasern wie Baumwolle-, Jute-, Flachs- oder Hanffasern, oder Eiweisfasern z.B. Wolle oder Seide bestehen.
Bevorzugt sind als organische Fasern jedoch Synthesefasern oder halbsynthetische Fasern weil deren Eigenschaften in bekannter Weise sehr gut auf den geplanten Einsatzzweck abgestimmt werden können.

Bevorzugte Fasermaterialien für die in den erfindunggemäßen Honeycomb-Materialien enthaltenen Verstärkungsgarne sind daher neben den anorganischen Fasern aus Glas oder Kohlenstoff Synthesefasern aus Polyolefinen insbesondere Polyethylen und Polypropylen, teil- oder vollaromatischen Polyestern, aliphatischen oder aromatischen Polyamiden, Polyetherketonen, Polyetheretherketonen, Polyethersulfonen, Polysulfonen, Polyacrylnitril, Polyphenylensulfid oder Polyetherimiden.
Aus Gründen einer besonders günstigen Kosten-Nutzen-Relation bestehen z.Zt. besonders bevorzugte Verstärkungsgarne aus Polyacrylnitril oder aus Polyestern, insbesondere auf Basis von Terephthalsäure und Ethylenglycol. Diese Polyester können neben den genannten Grundbausteinen weitere, ihre Eigenschaften modifizierende Dicarbonsäure- und/oder Diolbausteine, wie z.B. Reste der Isophthalsäure, aliphatischer Dicarbonsäuren mit in der Regel 6-10 Kohlenstoffatomen, der Sulfoisophthalsäure, Reste von längerkettigen Diolen mit in der Regel 3 bis 8 Kohlenstoffatomen, Etherdiolen, z.B. Diglycol- oder Triglycolreste oder auch geringe Anteile von Polyglycolresten enthalten. Diese modifizierenden Komponenten sind in der Regel zu nicht mehr als 15 Mol% in die Polyester einkondensiert. Besonders bevorzugt sind Verstärkungsgarne aus Polyethylenterephthalat mit einem Gehalt von unter 5 Mol% modifizierender Komponenten, insbesondere aus reinem unmodifizierten Polyethylenterephthalat oder Polybutylenterephthalat.

Besonders geeignet sind hier naturgemäß die für technische Zwecke produzierten hochfesten Polyacrylnitril- und Polyethylenterephthalat-Fasertypen wie z.B. die handelsüblichen (R)DOLANIT- oder (R)TREVIRA HOCHFEST - Typen der Firma Hoechst AG.

Ist das Matrixharz ein Thermoplastharz, so ist zu beachten, daß die Filamente des Verstärkungsgarns aus einem anorganischen Material, wie oben genannt (z.B. Glasfasern, Steinfasern, Keramikfasern, Kohlenstoffasern), oder aus einem organischen, spinnfähigen Material bestehen, dessen Schmelzpunkt oder Zersetzungspunkt höher liegt als der Schmelzpunkt des damit kombinierten Matrixmaterials.

Je nach den zur Verfügung stehenden Anlagen zur Herstellung des erfindungsgemäßen Honeycomb-Materials, insbesondere der Genauigkeit der Temperaturführung, werden Garnmaterial und Matrixmaterial so gewählt, daß der Schmelzpunkt oder Zersetzungspunkt des Materials der Filamente des Verstärkungsgarns mindestens 10°C, vorzugsweise mindestens 30°C über dem Schmelzpunkt des Matrixmaterials liegt.

Das Gewichtsverhältnis von Verstärkungsgarn zu Matrixmaterial beträgt 20:80 bis 80:20, vorzugsweise 40:60 bis 60:40. Es wird im Einzelfall so gewählt, daß bei der Verformung des Textilmaterials eine einwandfreie Öffnung der Zwischenfadenräume zu dem gewünschten porösen Netzwerk gewährleistet ist.

Einige Beispiele für geeignete Kombinationen für den in den erfindungsgemäßen Honeycomb-Material enthaltenen Faserverbundwerkstoff sind:(Reihenfolge: Faser/Matrix) Polyethylenterephthalat/Polybutylenterephthalat,
Glas/Polyethylen oder Polypropylen,
Glas/Polyetherimid
Kohlenstoffaser/Polyetherketon,
Aromatisches Polyamid(Aramid)/Polyethylenterephthalat,
Polyacrylnitril/Polyethylenterephthalat.

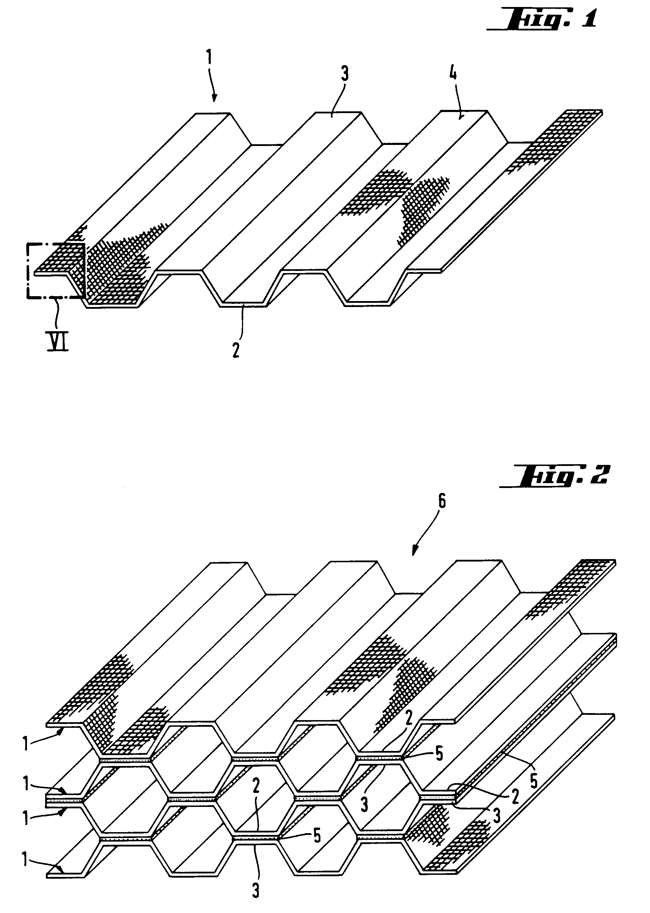

In der folgenden Beschreibung der Erfindung wird auf die Figuren 1 bis 6 Bezug genommen.

Die Figur 1 zeigt eine schräge Aufsicht auf einen Abschnitt einer erfindungsgemäß durch Zugverformung hergestellten Wellenfläche (1), die auf der textilen Grundfläche (2) beabstandete, geradlinige, streifenförmige Erhebungen (3) mit netzartig porösen Wänden aufweist. Das filigrane Netzwerk der Wellenfläche ist durch die aus Übersichtlichkeitsgründen nur stellenweise eingezeichnete Karoschraffur schematisch angedeutet.
Die in dieser Figur dargestellte Wellenfläche weist ebene Wellenköpfe (4) auf.

Die Figur 2 zeigt eine schräge Aufsicht auf einen Abschnitt eines durch Ünbereinanderstapeln und Verkleben an den streifenförmigen Berührungsflächen (5) von 4 der in Figur 1 dargestellten Wellenflächen erhaltenen Wabenblocks (6).

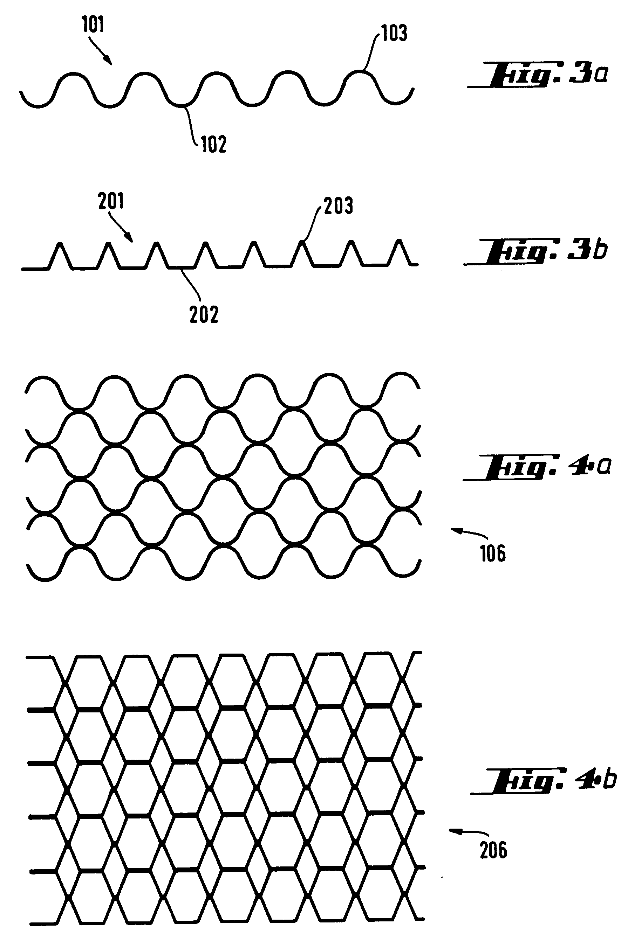

Die Figuren 3a und 3b zeigen schematisch Schnitte von weiteren Beispielen für die Form von erfindungsgemäß durch Zugverformung hergestellten Wellenflächen (101, 201), die auf der textilen Grundfläche (102, 202) beabstandete, geradlinige, streifenförmige Erhebungen (103, 203) mit netzartig porösen Wänden aufweisen, und die spitze (Figur 3a) oder runde (Figur 3b) Wellenköpfe aufweisen.

Die Figuren 4a und 4b zeigen schematisch Schnitte der durch Stapeln und reißfestem Verbinden der Berührungszonen der in den Figuren 3a und 3b dargestellten Wellenflächen erhaltenen Wabenblöcke (106) und (206).

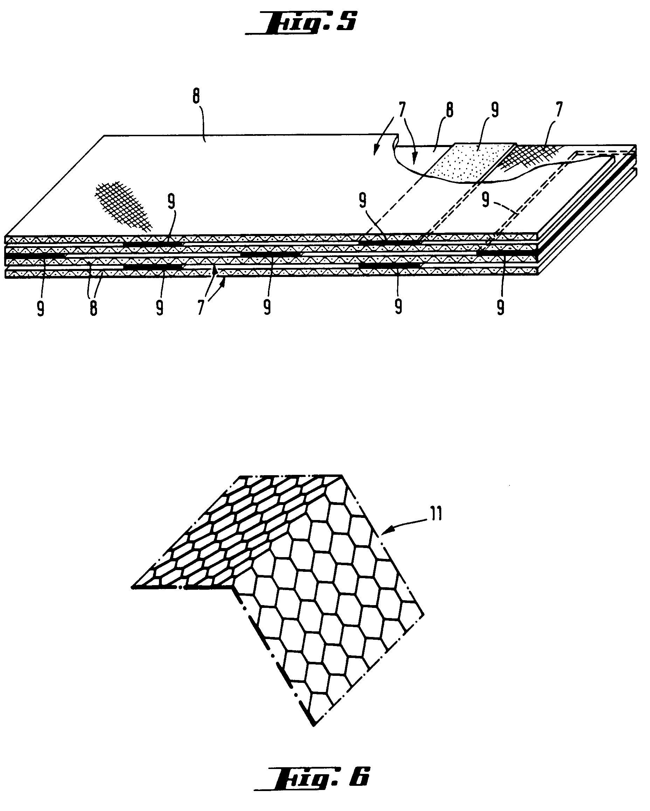

Die Figur 5 zeigt eine schräge Aufsicht auf einen Abschnitt eines Stapels aus mehreren Lagen (7) eines aus einem Verstärkungsgarn hergestellten, verformbaren, das Matrixmaterial enthaltenden textilen Flächengebilde (8) wobei jeweils benachbarte Lagen in beabstandeten geraden, streifenförmigen Zonen (9) durch ein Bindemittel (10) miteinander reißfest verbunden sind, und die streifenförmigen Verbindungszonen (9) aufeinanderfolgender Schichten gegeneinander versetzt sind.

Die Figur 6 zeigt in einer Aufsicht auf einen stark vergrößerten Teils einer Wandung des erfindungsgemäßen Honeycomb-Materials das filigrane Netzwerk (11), wie es durch die Zugverformung aus einem verformbaren, das Matrixmaterial enthaltenden, gewirkten textilen Flächengebilde erhalten wird.

Ein Gegenstand der vorliegenden Erfindung ist auch ein Verfahren zur Herstellung der erfindunggemäßen Honeycomb-Materialien.
Das erfindungsgemäße Herstellungsverfahren ist dadurch gekennzeichnet daß man ein aus einem der oben beschriebenen Verstärkungsgarne hergestelltes, verformbares, das Matrixmaterial enthaltendes textiles Flächengebilde bei einer Temperatur, bei der das ggf. vorhandene duroplastische Matrixmaterial aushärtet oder das ggf. vorhandene thermoplastische Matrixmaterial schmilzt, durch Zugverformung zu einer regelmäßigen Wellenfläche (1, 101, 201) verformt, die auf der textilen Grundfläche (2, 102, 202) beabstandete, geradlinige, streifenförmige Erhebungen (3, 103, 203) mit netzartig porösen Wänden aufweist, nach der Formstabilisierung der Wellenfläche mehrere Lagen dieses verformten Materials versetzt so übereinander stapelt, daß ein Wabenblock (6, 106, 206) entsteht, die Lagen an den streifenförmigen Berührungszonen miteinander reißfest verbindet und den Block senkrecht zu den Verbindungsstreifen der einzelnen Lagen in Scheiben der gewünschten Stärke schneidet.

Die Form der Wellenfläche kann selbstverständlich auch von der in Abbildung 1 beispielhaft veranschaulichten Form abweichen. So können beispielsweise Wellenflächen mit spitzen oder runden Wellenköpfen, wie in den Abbildungen 3a und 3b veranschaulicht, hergestellt werden, die bei der Kombination zu Wabenpaketen Hohlräume ergeben, die von der herkömmlichen sechseckigen Form abweichen und in den Abbildungen 4a und 4b veranschaulicht sind.

Bei der erfindungsgemäß auszuführenden Zugverformung des textilen Flächengebildes wird auf das Textilmaterial eine Zugspannung ausgeübt, die so groß ist, daß bei der Formgebung eine Flächenvergrößerung des Materials eintritt.
Als Folge der Flächenvergrößerung werden zumindest im Bereich der Verformung die Zwischenräume zwischen den benachbarten Fäden des Textilmaterials so vergrößert, daß eine poröses Netzwerk erhalten wird.
Die Zugverformung des textilen Flächengebildes erfolgt zweckmäßigerweise durch Tiefziehen.

Die Stabilisierung der Wellenfläche erfolgt bei der Anwendung von Duroplastharzen als Matrixharz während der bei erhöhter Temperatur ausgeführten Verformung, bei der das Hart vernetzt und damit aushärtet.
Bei Einsatz von thermoplastischen Matrixharzen ist zur Stabilisierung der Wellenfläche eine Abkühlung unter den Schmelzpunk des Thermoplastharzes erforderlich bevor das verformte Material von der Zugspannung, die die Wellenbildung bewirkt hat, entlastet wird.

Das durch Zugverformung zu verformende textile Flächengebilde kann ein aus dehnbaren, z.B. gekräuselten oder niedrigverstreckten Garnen hergestelltes Gewebe sein.

Vorzugsweise aber ist das textile Flächengebilde eine Maschenware, z.B. ein Gewirke oder Gestrick, welches aufgrund seiner Garnanordnung eine besonders hohe Dehnbarkeit aufweist.
Das der Verformung unterworfene textile Flächengebilde enthält, wie oben beschrieben, das Matrixmaterial in den ebenfalls oben angegebenen Mengen.
Harze im Sinne dieser Erfindung sind, wie oben bereits gesagt, im Prinzip alle hochmolekularen vernetzten oder unvernetzten Substanzen, deren mechanische Festigkeit ausreicht um ihnen Formbeständigkeit zu verleihen.
Vernetzte Polymere, die als Matrixhart geeignet sind, sind Zweikomponentenharze wie Epoxidharze, Mischungen ungesättigter Polyester (sog. Alkydharze) mit Vernetzern z.B. auf Basis von Polymethylolmelamin oder Duroplastharze wie Phenolharte, Melaminharze oder Harnstoffharze.
Andere, technisch weniger gängige Harzsysteme können analog eingesetzt werden.

Bevorzugt als Matrixmaterialien sind je nach Anwendungsgebiet Duroplaste, insbesondere Phenol-, Melamin- oder Harnstoffharze.
Besonders bevorzugt als Matrixmaterialien sind Thermoplaste, insbesondere Polykondensate, und zwar insbesondere teil- oder vollaromatische Polyester, aliphatische oder aromatische Polyamide, Polyetherketone, Polyetheretherketone, Polyethersulfone, Polysulfone, Polyphenylensulfid oder Polyetherimid.
Die Verwendung thermoplastischer Matrixharze ist insbesondere dann besonders bevorzugt, wenn eine problemlose Recyclisierbarkeit des Honeycomb-Material gefordert wird.

Das Matrixmaterial kann beispielsweise in Form eines Pulvers in das textile Flächengebilde eingearbeitet sein, oder es kann, insbesondere wenn es sich um ein duroplastisches Matrixmaterial handelt, einen durch einen Imprägniervorgang erhaltenen Überzug auf den Filamenten des Verstärkungsgarns bilden.
Besonders bevorzugt ist es jedoch, ein textiles Flächengebilde zu verformen, welches ein thermoplastische Matrixmatrial in Form von Filamenten enthält.
Das textile Flächengebilde kann in diesem Fall aus einem Mischgarn aus Thermoplast- und Verstärkungsfasern (sog. commingled yarn) hergestellt werden, oder Garne aus Thermoplastfasern und Garne aus nichtschmelzenden oder höherschmelzenden Verstärkungsfasern können bei der Herstellung des Flächengebildes in an sich bekannter Weise gemeisam verwebt (sog. coweaving-process) oder gewirkt werden.
Eine weitere Möglichkeit zur Herstellung eines textilen Flächengebildes, das ein thermoplastisches Matrixmaterial in Faserform (im Sinne dieser Erfindung umfaßt der Begriff "Fasern" sowohl Endlosfasern als auch Stapelfasern) enthält, besteht darin, daß ein Garn eingesetzt wird, daß ganz oder teilweise aus Bikomponentenfasern besteht, die aus einem höherschmelzenden und einem niedriger schmelzenden Polymermatrial zusammengesetzt sind. In diesen Bikomponentenfasern können die Polymerkomponenten in einer Seite-an-Seite-Anordnung oder in konzentrischer Kern-Mantel-Anordnung vorliegen.

Ein alternatives Verfahren zur Herstellung des erfindungsgemäßen Honeycomb-Materials ist dadurch gekennzeichnet daß man mehrere Lagen (7) eines aus einem Verstärkungsgarn hergestellten, verformbaren, das Matrixmaterial enthaltenden textilen Flächengebilde (8) aufeinanderschichtet und jeweils benachbarte Lagen in beabstandeten geraden, streifenförmigen Zonen miteinander reißfest verbindet, wobei die streifenförmigen Verbindungszonen (9) aufeinanderfolgender Schichten gegeneinander versetzt sind, den so hergestellten Stapel durch Auseinanderziehen von Grund-und Deckfläche zu einem Wabenblock verformt, den Block einer Wärmebehandlung zum Aushärten oder Aufschmelzen des Matrixharzes unterwirft, und ihn nach seiner Stabilisierung senkrecht zu den Verbindungsstreifen der einzelnen Lagen in Scheiben der gewünschten Stärke schneidet.

In diesem Fall erfolgt die Zugverformung der Wabenflächen beim Auseinanderziehen des Stapels zum Wabenblock.

Die Stabilisierung des Wabenblocks erfolgt bei der Anwendung von Duroplastharzen als Matrixharz während der Wärmebehandlung, bei der das Harz vernetzt und damit aushärtet.

Bei Einsatz von thermoplastischen Matrixharzen ist zur Stabilisierung des Wabenblocks eine Abkühlung unter den Schmelzpunk des Thermoplastharzes erforderlich bevor der Block von der Zugspannung, die die Wabenbildung bewirkt hat, entlastet wird.

Die zur Ausbildung des Wabenblocks bei beiden Verfahren erforderliche Herstellung einer reißfesten Verbindung zwischen den Textillagen erfolgt durch Nähen, Kleben oder Verschweißen.

Durch den Aufbau der Wabenwände des erfindungsgemäßen Honeycomb-Materials entsteht eine extrem leichte, filigrane Struktur, die dennoch eine überraschende mechanische Festigkeit besitzt. Bei Überlastung erfolgt nicht ein plötzlicher Zusammenbruch der Struktur, sondern Verformungen nehmen die Kräfte auf.
Darüberhinaus erlaubt die offenporige Netzstruktur auch die Durchströmung der Waben mit Gasen und anderen Fluiden und sie ermöglicht gewünschtenfalls ein einfaches Ausschäumen.
Ein weiterer sehr wesentlicher Vorteil der Filigranstruktur besteht darin, daß sich überraschenderweise eine festere Verbindung zwischen einem aus dem erfindungsgemäßen Honeycomb-Material hergestellten Sandwichkern und den Deckflächen herstellen läßt.

Ein weiterer Gegenstand der vorliegenden Erfindung ist ein flächenförmiger Sandwichformkörper bestehend aus zwei äußeren festen Deckschichten, die über einen Kern, bestehend aus dem oben beschriebenen erfindungsgemäßen Honeycomb-Material verbunden sind. Die Verbindung zwischen Deckschichten und Kern kann durch übliche Laminierverfahren unter Verwendung von Klebstoffen, insbesondere von kalt- oder hitzehätenden Klebstoffen wie z.B. Epoxidharzen oder Duroplastharzen erfolgen. Trotz der offenporigen Netzstruktur des erfindungsgemäßen Honeycomb-Materials haben die damit hergestellten Sandwichformkörper eine überraschend hohe Druckfestigkert bei extrem niedrigem Gewicht. Gerade in Verbindung mit der Flexibilität in der Materialauswahl, wie z.B. Glas Polyetherimid, eignen sie sich hervorragend als Konstruktionsmaterial zum Innenausbau von Fahrzeug-, insbesondere von Flugzeugzellen.

Das folgende Ausführungsbeispiel veranschaulicht die Herstellung eines erfindungsgemäßen porösen Honeycomb-Materials.

### Beispiel

Je ein Faden R-Glas-Multifilament dtex 340 und Polyetherimid-Multifilament dtex 380 f 48 werden mit Luft zu einem Hybridgarn dtex 720 verwirbelt. Aus dem Hybridgarn mit mit einem Volumenanteil von ca. 30 % Glas und ca. 70 % Polyetherimid wird eine dichte, aber dehnfähige Strickware mit einem Flächengewicht von 200 g/m² hergestellt.
Diese textile Fläche wird in ein Tiefziehwerkzeug eingelegt, auf eine Temperatur von 320°C aufgeheizt und zu einer Wellenfläche gemäß Fig.1 tiefgezogen, wobei die textile Fläche sich zu einem Netzwerk öffnet. Danach wird das Werkzeug wieder auf Raumtemperatur abgekühlt.
Das entformte Material ist durch das beim Tiefziehen aufgeschmolzene, die Glasfaser umhüllende, und dann durch Abkühlen verfestigte Polyetherimid in seiner Form stabilisiert.

Mehrere Lagen der parallele stegförmige Erhebungen mit flachen Wellenköpfen aufweisenden Wellenfläche werden so gestapelt, das ein Wabenblock gemäß Fig 2 entsteht, und die einzelnen Lagen durch Verkleben an den Berührungsflächen mit einem Epoxidharzkleber miteinander zu einem festen Wabenblock verbunden.

Das so hergestellte Wabenmaterial mit hexagonaler Struktur hat bei einer Wabenseitenlänge von 5mm ein Raumgewicht von nur 30 kg/m³. Die Druckfestigkeit eines Sandwiches von 10 mm Höhe aus diesem Material und beidseitig aufgebrachten Aluminium-Deckschichten beträgt 0,6 N/mm²

## Patentansprüche

1. Honeycomb-Material mit Wandungen aus einem Faserverbundwerkstoff, dadurch gekennzeichnet, daß die Wandungen des Materials aus einem *im wesentlichen offenporigen* porösen Netzwerk bestehen *und durch Aushärtung der Harz-Matrix formstabilisiert sind*.

2. Honeycomb-Material gemäß Anspruch 1, dadurch gekennzeichnet, daß der Faserverbundwerkstoff aus einem in einer Harz-Matrix eingebetteten Verstärkungsgarn besteht.

3. Honeycomb-Material gemäß einem der Ansprüche 1 und 2, dadurch gekennzeichnet, daß die Harzmatrix aus einem ausgehärteten Duroplastharz besteht.

4. Honeycomb-Material gemäß mindestens einem der Ansprüche 1 bis 3, dadurch gekennzeichnet, daß das Duroplastharz der Matrix ein Phenolharz, ein Melaminharz oder ein Harnstoffharz ist.

5. Honeycomb-Material gemäß mindestens einem der Ansprüche 1 bis 4, dadurch gekennzeichnet, daß. die Filamente des Verstärkungsgarns aus einem anorganischen Material (Glasfasern Steinfasern Keramikfasern Kohlenstoffasern) oder aus einem organischen, spinnfähigen Material bestehen.

6. Honeycomb-Material gemäß einem der Ansprüche 1 und 2, dadurch gekennzeichnet, daß der Faserverbundwerkstoff aus einem in einer Thermoplast-Matrix eingebetteten Verstärkungsgarn aus Filamenten besteht, die einen höheren Schmelzpunkt als der Thermoplast der Matrix aufweisen.

7. Honeycomb-Material gemäß mindestens einem der Ansprüche 1, 2 und 6, dadurch gekennzeichnet, daß die Thermoplastmatrix aus einem unzersetzt schmelzbaren organischen Polymerisat oder Polykondensat besteht.

8. Honeycomb-Material gemäß mindestens einem der Ansprüche 1, 2, 6 und 7, dadurch gekennzeichnet, daß das organische Polymerisat oder Polykondensat der Thermoplastmatrix einen Schmelzpunkt von 100 - 350°C hat.

9. Honeycomb-Material gemäß mindestens einem der Ansprüche 1, 2, und 6 bis 8, dadurch gekennzeichnet, daß das organische Polymerisat der Matrix ein gegebenenfalls substituiertes Polyalkylen (Polyethylen, Polypropylen, Polyvinylchlorid) ist.

10. Honeycomb-Material gemäß mindestens einem der Ansprüche 1, 2, und 6 bis 9, dadurch gekennzeichnet, daß das organische Polykondensat der Matrix ein teil- oder vollaromatischer Polyester, ein aliphatisches oder aromatisches Polyamid, ein Polyetherketon, Polyetheretherketon, Polyethersulfon, Polysulfon, Polyphenylensulfid oder Polyetherimid ist.

11. Honeycomb-Material gemäß mindestens einem der Ansprüche 1, 2, und 6 bis 10, dadurch gekennzeichnet, daß. die Filamente des Verstärkungsgarns aus einem anorganischen Material (Glasfasern Steinfasern Keramikfasern Kohlenstoffasern) oder aus einem organischen, spinnfähigen Material bestehen, dessen Schmelzpunkt oder Zersetzungspunkt höher liegt als der Schmelzpunkt des damit kombinierten Matrixmaterials.

12. Honeycomb-Material gemäß mindestens einem der Ansprüche 1, 2, und 6 bis 11, dadurch gekennzeichnet, daß der Schmelzpunkt oder Zersetzungspunkt des Materials der Filamente des Verstärkungsgarns mindestens 10°C, vorzugsweise mindestens 30°C über dem Schmelzpunkt des Matrixmaterials liegt.

13. Verfahren zur Herstellung des Honeycomb-Materials des Anspruchs 1, dadurch gekennzeichnet, daß man ein aus einem Verstärkungsgarn hergestelltes, verformbares, ein duroplastisches oder thermoplastisches Matrixmaterial enthaltendes textiles Flächengebilde bei einer Temperatur, bei der das ggf vorhandene duroplastische Matrixmaterial aushärtet oder das ggf. vorhandene thermoplastische Matrixmaterial schmilzt, durch Zugverformung zu einer regelmäßigen Wellenfläche (1, 101, 201) verformt, die Zugverformung so durchgeführt wird, daß sich im Bereich der Verformung die Zwischenräume zwischen den benachbarten Fäden des Textilmaterials so vergrößern, daß eine poröses Netzwerk erhalten wird, die auf der textilen Grundfläche (2, 102, 202) beabstandete, geradlinige, streifenförmige Erhebungen (3, 103, 203) mit netzartig porösen Wänden aufweist, nach der Formstabilisierung der Wellenfläche mehrere Lagen dieses verformten Materials versetzt so übereinander stapelt, daß ein Wabenblock (6, 106, 206) entsteht, die Lagen an den streifenförmigen Berührungszonen miteinander reißfest verbindet und den Block senkrecht zu den Verbindungsstreifen der einzelnen Lagen in Scheiben der gewünschten Stärke schneidet.

14. Verfahren gemäß Anspruch 13, dadurch gekennzeichnet, daß die Zugverformung des textilen Flächengebildes durch Tiefziehen erfolgt.

15. Verfahren zur Herstellung des Honeycomb-Materials des Anspruchs 1, dadurch gekennzeichnet, daß man mehrere Lagen eines aus einem Verstärkungsgarn hergestellten, verformbaren, das Matrixmaterial enthaltenden textilen Flächengebilde (8) aufeinanderschichtet und jeweils benachbarte Lagen in beabstandeten geraden, streifenförmigen Zonen (9) miteinander reißfest verbindet, wobei die streifenförmigen Verbindungszonen (9) aufeinanderfolgender Schichten gegeneinander versetzt sind, den so hergestellten Stapel durch Auseinanderziehen von Grund-und Deckfläche zu einem Wabenblock (6) verformt, den Block einer Wärmebehandlung zum Aushärten oder Aufschmelzen des Matrixharzes unterwirft, und ihn nach seiner Stabilisierung senkrecht zu den Verbindungsstreifen der einzelnen Lagen in Scheiben der gewünschten Stärke schneidet.

16. Verfahren gemäß mindestens einem der Ansprüche 13 bis 15, dadurch gekennzeichnet, daß das verformbare, das Matrixmatrial enthaltende textile Flächengebilde ein dehnbares Gewebe, Gewirke oder Gestrick ist.

17. Verfahren gemäß mindestens einem der Ansprüche 13 bis 16, dadurch gekennzeichnet, daß das textile Flächengebilde ein Phenol- oder Melaminharz als Matrixmaterial enthält.

18. Verfahren gemäß mindestens einem der Ansprüche 13 bis 17, dadurch gekennzeichnet, daß das textile Flächengebilde ein thermoplastisches Material als Matrixmaterial enthält.

19. Verfahren gemäß mindestens einem der Ansprüche 13 bis 18, dadurch gekennzeichnet, daß die reißfeste Verbindung zwischen den Textillagen durch Nähen, Kleben oder Verschweißen hergestellt wird.

20. Verfahren gemäß mindestens einem der Ansprüche 13 bis 19, dadurch gekennzeichnet, daß das Matrixmaterial in das textile Flächengebilde in Form eines Pulvers eingearbeitet ist, oder, insbesondere wenn es sich um ein duroplastisches Matrixmaterial handelt, einen durch einen Imprägniervorgang erhaltenen Überzug auf den Filamenten des Verstärkungsgarns bildet.

21. Verfahren gemäß mindestens einem der Ansprüche 13 bis 20, dadurch gekennzeichnet, daß ein textiles Flächengebilde verformt wird, welches das thermoplastische Matrixmatrial in Form von Filamenten enthält.

22. Verwendung des Honeycomb-Materials des Anspruchs 1 zur Herstellung von Sandwichformkörpern.

23. Flächenförmiger Sandwichformkörper bestehend aus zwei äußeren festen Deckschichten, die über einen Kern aus leichtem Material verbunden sind, dadurch gekennzeichnet, daß der Kern aus dem Honeycomb-Material des Anspruchs 1 besteht.

24. Verfahren zur Herstellung des Sandwichformkörpers des Anspruchs 23, dadurch gekennzeichnet, daß man gemäß einem der Ansprüche 13 oder 15 ein Honeycomb-Material des Anspruchs 1 erzeugt und auf dieses anschließend beidseitig die Deckschichten in an sich bekannter Weise auflaminiert.

## Claims

1. A honeycomb material having walls composed of a fiber composite, characterized in that the walls of the material consist of an essentially open-pore porous network and have been dimensionally stabilized by curing the resin matrix.

2. The honeycomb material of claim 1, characterized in that the fiber composite consists of a reinforcing yarn embedded in a resin matrix.

3. The honeycomb material of either of claims 1 and 2, characterized in that the resin matrix consists of a thermoset resin.

4. The honeycomb material of at least one of claims 1 to 3, characterized in that the thermoset resin of the matrix is a phenolic resin, a melamine resin or a urea resin.

5. The honeycomb material of at least one of claims 1 to 4, characterized in that the filaments of the reinforcing yarn consist of an inorganic material (glass fibers, mineral fibers, ceramic fibers, carbon fibers) or an organic, spinnable material.

6. The honeycomb material of either of claims 1 and 2, characterized in that the fiber composite consists of a reinforcing yarn embedded in a thermoplastic matrix and consist of filaments with a higher melting point than the thermoplastic of the matrix.

7. The honeycomb material of at least one of claims 1, 2 and 6, characterized in that the thermoplastic matrix consists of an organic addition or condensation polymer that is meltable without decomposing.

8. The honeycomb material of at least one of claims 1, 2, 6 and 7, characterized in that the organic addition or condensation polymer of the thermoplastic matrix has a melting point of 100-350°C.

9. The honeycomb material of at least one of claims 1, 2 and 6 to 8, characterized in that the organic addition polymer of the matrix is a substituted or unsubstituted polyalkylene (polyethylene, polypropylene, polyvinyl chloride).

10. The honeycomb material of at least one of claims 1, 2 and 6 to 9, characterized in that the organic condensation polymer of the matrix is a partly or wholly aromatic polyester, an aliphatic or aromatic polyamide, a polyether ketone, a polyether ether ketone, a polyether sulfone, a polysulfone, a polyphenylene sulfide or a polyether imide.

11. The honeycomb material of at least one of claims 1, 2 and 6 to 10, characterized in that the filaments of the reinforcing yarn consist of an inorganic material (glass fibers, mineral fibers, ceramic fibers, carbon fibers) or an organic, spinnable material whose melting point or decomposition point is higher than the melting point of the matrix material combined therewith.

12. The honeycomb material of at least one of claims 1, 2 and 6 to 11, characterized in that the melting point or decomposition point of the material of the filaments of the reinforcing yarn is at least 10°C, preferably at least 30°C, above the melting point of the matrix material.

13. A process for manufacturing the honeycomb material of claim 1, characterized in that it comprises forming a formable textile sheet material produced from a reinforcing yarn and comprising a thermosetting or thermoplastic matrix material by drawing at a temperature at which any thermosetting matrix material present sets or any thermoplastic matrix material present melts into a regular wavy sheet (1, 101, 201), carrying out the drawing process in such a way that, in the region undergoing deformation, the spaces between the adjacent threads of the textile material increase so as to produce a porous network which wavy sheet has on the textile base material (2, 102, 202) spaced-apart, straight-line, stripey elevations (3, 103, 203) with nettily porous walls, shape stabilizing the wavy sheet material, stacking a plurality of plies of this shaped material on top of one another with an offset in such a manner as to produce a honeycomb block (6, 106, 206), bonding the plies together in a tear-resistant manner at the stripey contact zones, and cutting the block perpendicularly to the bonding strips of the individual plies into slices of the desired thickness.

14. The process of claim 13, characterized in that the drawing process to which the textile sheet material is subjected is one of deep-drawing.

15. A process for producing the honeycomb material of claim 1, characterized in that it comprises placing on top of one another a plurality of plies of formable textile sheet material (8) produced from a reinforcing yarn and comprising the matrix material, bonding together pairs of adjacent plies in a tear-resistant manner in spaced-apart straight, stripey zones (9), the stripey bonding zones (9) of successive layers being mutually offset, forming the resulting stack by pulling apart base and cover sheet into a honeycomb block (6), subjecting the block to a heat treatment to cure or melt the matrix resin, and, after stabilization, cutting it perpendicularly to the bonding strips of the individual plies into slices of the desired thickness.

16. The process of at least one of claims 13 to 15, characterized in that the formable textile sheet material comprising the matrix material is an extensible woven or knitted fabric.

17. The process of at least one of claims 13 to 16, characterized in that the textile sheet material comprises a phenolic or melamine resin as matrix material.

18. The process of at least one of claims 13 to 17, characterized in that the textile sheet material comprises a thermoplastic material as matrix material.

19. The process of at least one of claims 13 to 18, characterized in that the tear-resistant bond between the textile plies is produced by sewing, adhering or welding.

20. The process of at least one of claims 13 to 19, characterized in that the matrix material has been incorporated into the textile sheet material in the form of a powder or, in particular in the case of a thermosetting matrix material, forms an impregnation-produced coating on the filaments of the reinforcing yarn.

21. The process of at least one of claims 13 to 20, characterized in that the textile sheet material undergoing forming includes the thermoplastic matrix material in the form of filaments.

22. The use of the honeycomb material of claim 1 for manufacturing sandwich structures.

23. A sheetlike sandwich structure consisting of two outer firm cover layers bonded together via a core of lightweight material, characterized in that the core consists of the honeycomb material of claim 1.

24. A process for manufacturing the sandwich structure of claim 23, characterized in that it comprises producing a honeycomb material of claim 1 according to either of claims 13 and 15 and then laminating it on both sides with the cover layers in a conventional manner.

## Revendications

1. Matériau en nid d'abeilles avec des parois en matériau composite fibreux, caractérisé en ce que les parois du matériau sont constitués d'un réseau poreux, *essentiellement à pores ouverts* et *il est stabilisé dimensionnellement par le durcissement de la matrice de résine*.

2. Matériau en nid d'abeilles selon la revendication 1, caractérisé en ce que le matériau composite fibreux est constitué d'un fil de renfort multifilament enrobé d'une matrice de résine.

3. Matériau en nid d'abeilles selon la revendication 1 ou 2, caractérisé en ce que la matrice en résine est une résine thermodurcussible durcie.

4. Matériau en nid d'abeilles selon au moins l'une des revendications 1 à 3, caractérisé en ce que le plastique thermodurcissable de la matrice est une résine phénolique, une résine de mélamine ou une résine d'urée.

5. Matériau en nid d'abeilles selon au moins l'une des revendications 1 à 4, caractérisé en ce que les filaments du fil de renfort multifilament sont en une matière inorganique (fibres de verre, fibres de roche, fibres de céramique, fibre de carbone) ou en une matière organique, apte à être filée.

6. Matériau en nid d'abeilles selon l'une des revendications 1 et 2, caractérisé en ce que le matériau composite est constitué d'un fil de renfort multifilament enrobé d'une matrice thermoplastique, les filaments présentant un point de fusion plus élevé que le thermoplastique de la matrice.

7. Matériau en nid d'abeilles selon au moins l'une des revendications 1, 2 et 6, caractérisé en ce que la matrice thermoplastique est constituté d'un polycondensat ou d'un polymère organique fusible sans dégradation.

8. Matériau en nid d'abeilles selon au moins l'une des revendications 1, 2, 6 et 7, caractérisé en ce que le polymère organique ou le polycondensat de la matrice thermoplastique a un point de fusion de 100 à 350°C.

9. Matériau en nid d'abeilles selon au moins l'une des revendications 1, 2 et 6 à 8, caractérisé en ce que le polymère organique de la matrice est un polyalkylène (polyéthylène, polypropylène, poly(chlorure de vinyle)) éventuellement substitué.

10. Matériau en nid d'abeilles selon au moins l'une des revendications 1, 2 et 6 à 9, caractérisé en ce que le polycondensat organique de la matrice est un polyester partiellement ou entièrement aromatique, un polyamide aliphatique ou aromatique, une polyéthercétone, une polyétheréthercétone, une polyéthersulfone, une polysulfone, un sulfure de polyphénylène ou un polyétherimide.

11. Matériau en nid d'abeilles selon au moins l'une des revendications 1, 2 et 6 à 10, caractérisé en ce que les filaments du fil de renfort multifilament sont en une matière inorganique (fibres de verre, fibres de roche, fibres céramiques, fibres de carbone) ou en une matière organique apte à filer, dont le point de fusion ou le point de décomposition est supérieur au point de fusion de la matière de matrice à laquelle ils sont combinés.

12. Matériau en nid d'abeilles selon au moins l'une des revendications 1, 2, et 6 à 11, caractérisé en ce que le point de fusion ou de décomposition de la matière des filamanets du fil de renfort multifilament est supérieur d'au moins 10°C, de préférence d'au moins 30°C au point de fusion de la matière de matrice.

13. Procédé pour la préparation du matériau en nid d'abeilles selon la revendication 1, caractérisé en ce qu'une une étoffe textile comportant une matrice en matière thermodurcissable ou thermoplastique, laquelle matrice déformable constituée en un fil de renfort multifilament, est déformée à une température à laquelle durcit la matière de la matrice thermodurcissable éventuellement présente ou à laquelle fond la matière de la matrice thermoplastique éventuellement présente, par déformation par étirage pour obtenir une surface ondulée uniforme (1, 101, 201), la déformation par étirage étant effectuée de façon telle que, dans le domaine de la déformation, les espaces interstitiels entre les fils voisins de la matière textile augmentent dans une mesure telle, que l'on obtient un réseau poreux, qui présente sur la surface de base textile (2, 102, 202) des élévations espacées, droites, en forme de bandes (3, 103, 203) avec des parois réticulées poreuses, après stabilisation dimensionnelle de la surface ondulée, on empile l'une sur l'autre plusieurs couches de cette matière déformée en vue de former un bloc alvéolé (6, 106, 206), on relie entre elles les couches de façon à résister à la rupture dans les plaques de jonction sous forme de bande, et on coupe en tranches d'une épaisseur voulue le bloc perpendiculairement aux plaques de jonction des différentes couches.

14. Procédé selon la revendication 13, caractérisé en ce que la déformation par étirage de l'étoffe textile est effectuée par emboutissage.

15. Procédé pour la préparation du matériaux en nid d'abeilles de la revendication 1, caractérisé en ce que l'on empile les une sur les autres plusieurs couches d'étoffe textile (8) comportant la matière de la matrice déformable, constituée en un fil de renfort multifilament et on relie les couches voisines en zones (9) sous forme de bandes droites espacées, en plaçant les plaques de jonction en forme de bandes (9) les unes contre les autres en couches successives, on déforme l'empilage ainsi préparé par étirage en sens opposé de la couche de fond et de la couche supérieure pour obtenir un bloc ealvéolaire (6), on traite le bloc par la chaleur en vue de durcissement ou en vue de fusion de la résine de la matrice et on le coupe, après stabilisation, perpendiculairement aux plaques de jonction des différentes couches, pour obtenir des tranches d'une épaisseur voulue.

16. Procédé selon au moins l'une des revendications 13 à 15, caractérisé en ce que l'étoffe textile déformable renfermant la matière de matrice, est un tissu, une maille ou un tricot extensible.

17. Procédé selon au moins l'une des revendications 13 à 16, caractérisé en ce que l'étoffe textile contient une résine phénolique ou une résine de mélamine comme matière de matrice.

18. Procédé selon au moins l'une des revendications 13 à 17, caractérisé en ce que l'étoffe textile contient une matière thermoplastique comme matière de matrice.

19. Procédé selon au moins l'une des revendications 13 à 18, caractérisé en ce que la liaison résistante à la rupture entre les couches textiles est effectué par couture, par collage ou par soudure.

20. Procédé selon au moins l'une des revendications 13 à 19, caractérisé en ce que la matière de matrice est incorporée à l'étoffe textile sous forme pulvérulente, ou, notamment lorsqu'il s'agit d'un thermodurcissable, on applique aux filaments du fil de renfort multifilament un revêtement que l'on obtient par un procédé d'imprégnation.

21. Procédé selon au moins l'une des revendications 13 à 20, caractérisé en ce qu'on déforme l'étoffe textile contenant la matière de matrice thermoplastique sous forme de filaments.

22. Utilisation de la matière en nid d'abeilles de la revendication 1 pour la préparation de corps sandwich.

23. Corps sandwich plat constitué de deux semelles solides qui sont liés par l'intermédiaire d'une âme en matière légère, caractérisé en ce que l'âme est constitué de la matière en nid d'abeilles de la revendication 1.

24. Procédé pour la préparation d'un corps sandwich de la revendication 23, caractérisé en ce que l'on produit un matériau en nid d'abeilles de la revendication 1 et on stratifie par laminage des deux côté des semelles de façon connue en soi.
